# EUROPÄISCHE PATENTANMELDUNG

(11) **EP 1 102 390 A2**
(43) Veröffentlichungstag der Anmeldung: **23.05.2001**
(21) Anmeldenummer: 00125566.0
(22) Anmeldetag: 22.11.2000
(51) Int. Cl.: H02P 7/29

(54) **Antriebseinrichtung für Aufzugtüren**

(30) Priorität: 22.11.1999 DE 19956076
(71) Anmelder: SIEMENS AKTIENGESELLSCHAFT, 80333 München (DE)
(72) Erfinder: Ludwig, Heinz, 30823 Garbsen (DE); Sonntag, Guido, 30989 Gehrden (DE)

(57) **Zusammenfassung**

Antriebseinrichtung für Aufzugtüren, mit einem Netztransformator (1), einem Steuergerät (4), zu dem eine Leistungseinheit (3) gehört, an deren Eingangsseite der Netztransformator (1) angeordnet ist, und einem Gleichstrommotor (10), der an der Ausgangsseite der Leistungseinheit (3) des Steuergeräts (4) angeordnet ist und dessen Spannungsregelung durch das Steuergerät (4) realisierbar ist, wobei die Spannungsregelung des Gleichstrommotors (10) der Antriebseinrichtung ausschließlich über eine Software-Regelung erfolgt.

## Beschreibung

Die Erfindung bezieht sich auf eine Antriebseinrichtung für Aufzugtüren mit einem Netztransformator, einem Steuergerät, zu dem eine Leistungseinheit gehört, an deren Eingangsseite der Netztransformator angeordnet ist, und einem Gleichstrommotor, der an der Ausgangsseite der Leistungseinheit des Steuergeräts angeordnet ist und dessen Spannungsregelung durch das Steuergerät realisierbar ist.

Bei bekannten derartigen Antriebseinrichtungen für Aufzugtüren erfolgt die Spannungsregelung des Gleichstrommotors über einen in der Leistungseinheit des Steuergeräts vorgesehenen DC/DC-Konverter sowie über eine Software-Regelung. Der vorstehend erwähnte DC/DC-Konverter, der im Leistungsteil des Steuergeräts normalerweise vorgesehen ist, ist an eine Notstromversorgung, die als Akku bzw. als Batterie ausgebildet ist, angeschlossen. Des weiteren ist das Leistungsteil des Steuergeräts der bekannten Antriebseinrichtungen mit einer Überspannungsabschaltung und mit einer RS485-Schnittstelle versehen, mittels der ein Handterminal anschließbar ist. Darüber hinaus hat ein Steuergerät einer bekannten Antriebseinrichtung eine Umschalteinheit, mittels der die Ermittlung der Eingabeparameter von Potentiometern zum Handterminal umschaltbar ist. Zum Anschluß der RS485-Schnittstelle an einen Mikrocontroller des Steuergeräts ist des weiteren im Bereich des Mikrocontrollers des Steuergeräts der bekannten Antriebseinrichtung ein serieller BUS vorgesehen.

Als Relaisfunktionen des Steuergeräts der bekannten Antriebseinrichtung sind "AUF", "ZU" und "UMSTEUERN" vorgesehen. Der Erfindung liegt die Aufgabe zugrunde, die eingangs geschilderte Antriebseinrichtung für Aufzugtüren erheblich zu vereinfachen, um so einen sog. "LOWCOST" zur Verfügung zu stellen, der bei einer Vielzahl von an Antriebseinrichtungen für Aufzugtüren gestellten Anforderungsprofilen für einen wirtschaftlich günstigen Betrieb völlig ausreichend ist.

Diese Aufgabe wird erfindungsgemäß dadurch gelöst, daß die Spannungsregelung des Gleichstrommotors der Antriebseinrichtung ausschließlich über eine Software-Regelung erfolgt. Insbesondere bei Aufzugtüren mit einer maximalen Türmasse von bis zu 120 kg kann eine derartig vereinfachte Antriebseinrichtung für Aufzugtüren vorteilhaft eingesetzt werden. Im Mikrocontroller des Steuergeräts kann der bei aus dem Stand der Technik bekannten Antriebseinrichtungen für Aufzugtüren vorhandene serielle BUS entfallen, da kein Handterminal und somit auch keine RS485-Schnittstelle vorhanden sind. Des weiteren entfällt die Umschalteinheit, zwischen der von Potentiometer- auf Handterminal-Betrieb umgeschaltet wird. Des weiteren sind im Steuergerät der erfindungsgemäßen Antriebseinrichtung für Aufzugtüren keine Erweiterungsmodule vorgesehen, so daß auch eine entsprechende Schnittstelle entfallen kann.

Die Leistungseinheit des Steuergeräts der erfindungsgemäßen Antriebseinrichtung ist vorzugsweise überspannungsabschaltungsfrei ausgebildet und hat einen Gleichrichter, einen Ballastschalter, eine Stromerfassung, eine Endstufe-H-Brücke und einen zweiten Abschaltweg.

Der Gleichstrommotor der erfindungsgemäßen Antriebseinrichtung ist vorteilhaft als 24V/3,3A-Gleichstrommotor ausgebildet.

Des weiteren ist die Leistungseinheit des Steuergeräts ohne eine Notstromversorgung in Form einer Batterie, eines Akkumulators od.dgl. ausgebildet.

Das Steuergerät hat vorzugsweise einen Mikrocontroller mit einem A/D-Wandler, zu dem ein EPROM-Programmspeicher, ein RAM-Datenspeicher und ein EEPROM-Datenspeicher gehören.

Der Mikrocontroller des Steuergeräts ist gemäß einer vorteilhaften Ausgestaltung der erfindungsgemäßen Antriebseinrichtung an eine Diagnoseeinheit angeschlossen.

Vorteilhaft ist ein dem Steuergerät zugeordnetes Steuerausgangsteil bedarfsweise bestückbar.

Der Netztransformator der erfindungsgemäßen Antriebseinrichtung für Aufzugtüren ist vorzugsweise als 190VA-Netztransformator ausgebildet, wobei an seiner Sekundärseite zweckmäßigerweise 22V bei 8,6A vorliegen.

Im folgenden wird die Erfindung an Hand einer Ausführungsform unter Bezugnahme auf die Zeichnung näher dargestellt, in deren einziger Figur die wesentlichen Bestandteile einer erfindungsgemäßen Antriebseinrichtung für Aufzugtüren prinzipiell dargestellt sind.

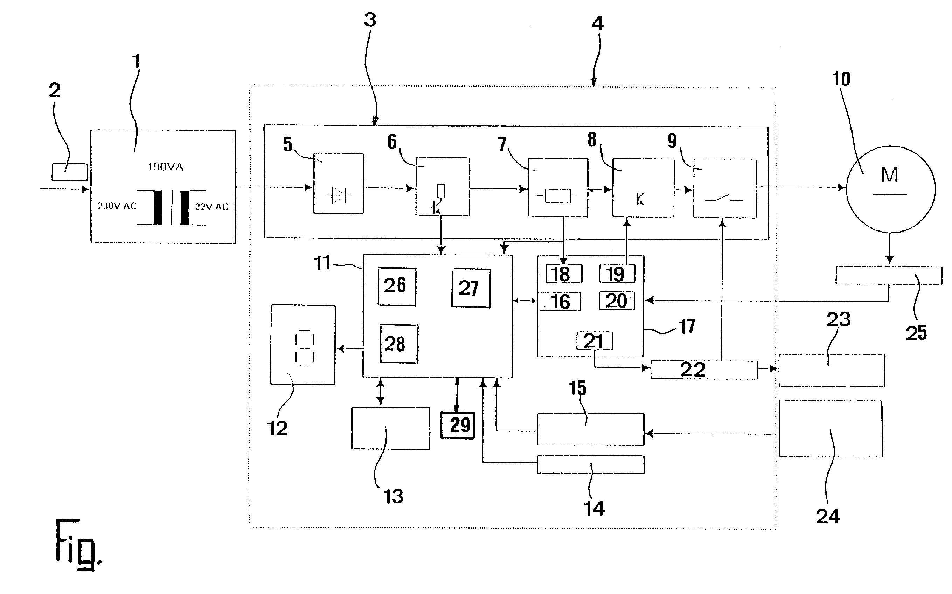

Zu einer in FIG 1 prinzipiell dargestellten Antriebseinrichtung für Aufzugtüren gehört ein Netztransformator 1, der im dargestellten Ausführungsbeispiel als 190VA-Netztransformator ausgebildet ist. Der Netztransformator 1 ist primärseitig mit dem Netz 2 und sekundärseitig mit der Eingangsseite einer Leistungseinheit 3 eines Steuergeräts 4 verbunden.

An der Sekundärseite des 190VA-Netztransformators 1 stehen bei 22V 8,6A zur Verfügung.

In der Leistungseinheit 3 des Steuergeräts 4 folgen ein Gleichrichter 5, ein Ballastschalter 6, eine Stromerfassung 7, eine Endstufe-H-Brücke 8 und ein zweiter Abschaltweg 9 in Flußrichtung des elektrischen Stroms aufeinander, wobei die Leistungseinheit 3 ausgangsseitig an einen Gleichstrommotor 10 angeschlossen ist.

Die Spannungsregelung des Gleichstrommotors 10 der erfindungsgemäßen Antriebseinrichtung für Aufzugtüren erfolgt ausschließlich über eine Softwareregelung.

Der Gleichstrommotor ist als 24V/3,3A-Gleichstrommotor 10 ausgebildet.

An den Ballastschalter 6 und an die Stromerfassung 7 der Leistungseinheit 3 des Steuergeräts 4 ist ein Mikrocontrollersystem 11 des Steuergeräts 4 angeschlossen, das seinerseits mit einer Diagnoseeinheit 12, einer Unterspannungsüberwachung-und einem Watch Dog 13, Potentiometern 14, einer Eingangsfilter/Potentialtrennungs-Einheit 15 und einem µP-BUS 16 eines ASIC 17 verbunden ist.

Das ASIC weist des weiteren ein Imax 18, ein PWM (Pulsweitenmodulation)-Teil 19, einen Zähler 20 und einen BUS 21 auf, wobei das Imax 18 an die Stromerfassung 7 der Leistungseinheit 3, das PWM-Teil 19 an die Endstufe-H-Brücke 8 der Leistungseinheit 3 und der BUS an ein Relais 22 angeschlossen sind.

Das Relais 22 ist mit dem zweiten Abschaltweg 9 der Leistungseinheit 3 und mit einem dem Steuergerät 4 zugeordneten Steuerausgangsteil 23 verbunden, welches im dargestellten Ausführungsbeispiel mit zwei Steuerausgängen, wahlweise "AUF", "ZU" oder "Pev.", bestückt ist.

Der Eingangsfilter/Potentialtrennungs-Einheit 15 ist eine Steuersignaleinheit 24 zugeordnet, die im dargestellten Ausführungsbeispiel über die Steuersignale "AUF ZU", "DRÄNGELN" und "LICHTSCHRANKE" verfügt.

Dem Gleichstrommotor 10 ist ein Inkrementalgeber 25 zugeordnet, mittels dem die jeweilige Motorstellung in das ASIC 17 eingegeben wird.

Bei der vorstehend geschilderten Antriebseinrichtung für Aufzugtüren handelt es sich um einen sog. "LOWCOST"-Antrieb, der bei entsprechenden Anforderungsprofilen wirtschaftlich besonders günstig einsetzbar ist.

Im Mikrocontrollersystem 11 des Steuergeräts 4 sind ein Mikrocontroller mit A/D-Wandler 26, ein EPROM-Programmspeicher 27, ein RAM-Datenspeicher 28 und ein EEPROM-Datenspeicher 29 vorgesehen.

## Patentansprüche

1. Antriebseinrichtung für Aufzugtüren, mit einem Netztransformator (1), einem Steuergerät (4), zu dem eine Leistungseinheit (3) gehört, an deren Eingangsseite der Netztransformator (1) angeordnet ist, und einem Gleichstrommotor (10), der an der Ausgangsseite der Leistungseinheit (3) des Steuergeräts (4) angeordnet ist und dessen Spannungsregelung durch das Steuergerät (4) realisierbar ist, **dadurch gekennzeichnet,** daß die Spannungsregelung des Gleichstrommotors (10) der Antriebseinrichtung ausschließlich über eine Software-Regelung erfolgt.

2. Antriebseinrichtung nach Anspruch 1, bei der die Leistungseinheit (3) des Steuergeräts (4) überspannungsabschaltungsfrei ausgebildet ist und einen Gleichrichter (5), einen Ballastschalter (6), eine Stromerfassung (7), eine Endstufe-H-Brücke (8) und einen zweiten Abschaltweg (9) aufweist.

3. Antriebseinrichtung nach Anspruch 1 oder 2, bei der der Gleichstrommotor (10) als 24V/3,3A-Gleichstrommotor (10) ausgebildet ist.

4. Antriebseinrichtung nach einem der Ansprüche 1 bis 3, bei der die Leistungseinheit (3) des Steuergeräts (4) notstromversorgungsfrei ausgebildet ist.

5. Antriebseinrichtung nach einem der Ansprüche 1 bis 4, deren Steuergerät (4) ein Mikrocontrollersystem (11) mit einem Mikrocontroller mit einem A/D-Wandler (26), einem EPROM-Programmspeicher (27), einem RAM-Datenspeicher (28) und einem EEPROM-Datenspeicher (29) aufweist.

6. Antriebseinrichtung nach einem der Ansprüche 1 bis 5, bei der ein Mikrocontrollersystem (11) des Steuergeräts (4) an eine Diagnoseeinheit (12) angeschlossen ist.

7. Antriebseinrichtung nach einem der Ansprüche 1 bis 6, bei der ein dem Steuergerät (4) zugeordnetes Steuerausgangsteil (23) bedarfsweise bestückbar ist.

8. Antriebseinrichtung nach einem der Ansprüche 1 bis 7, bei der der Netztransformator (1) als 190VA-Netztransformator ausgebildet ist und an seiner Sekundärseite 22V bei 8,6A vorliegen.
